# EUROPEAN PATENT APPLICATION

(11) **EP 1 701 034 A2**
(43) Date of publication of application: **13.09.2006**
(21) Application number: 06396006.6
(22) Date of filing: 02.03.2006
(51) Int. Cl.: F03D 7/02

(54) **Method for stopping the rotor of a wind power plant**

(30) Priority: 09.03.2005 FI 20050256
(71) Applicant: Winwind Oy, 00210 Helsinki (FI)
(72) Inventor: Böhmeke, Georg c/o Winwind OY, 00210 Helsinki (FI)
(74) Representative: Helino, Timo Kalervo

(57) **Abstract**

The invention relates to a method for stopping the rotor of a wind power plant when the blade angles are in the operating position and the tower is inclined to the direction of the wind. According to the invention, in the method, the blade angles of the blades of the rotor are adjusted from the operating position towards the storm position so that at the first step, the blade angles are turned at the first blade angle speed so that the rotor brakes; at the second step, the blade angle speed is reduced so that while in the operating position, the rotor acts to soften the pendulous motion of the tower against the wind; and at the third step, as the pendulous motion of the tower turns to be parallel to the wind, the blade angle speed is increased to enhance the braking.

## Description

### FIELD OF THE INVENTION

The invention relates to a method for stopping the rotor of a wind power plant from an operating position, as defined in the preamble of claim 1.

### BACKGROUND OF THE INVENTION

In a normal production situation, the tower of a wind power plant is subjected to relatively great forces that bend the tower into the direction of the wind. The wind power plant is stopped by turning the blade angels of the blades from the operating position to the braking position, i.e. towards the storm position. When especially in various fault situations, the rotor has to be stopped as fast as possible, the rotating rotor produces a negative thrust, and the power plant sucks itself against the wind. This kind of powerful suction together with the springiness of the tower causes a pendulous motion of the tower, which can be greater against the wind than the bend parallel to the wind in a normal production situation.

The bending moments appearing in braking situations can damage the structures of the tower, and in any case, they must be taken into account when designing the structures so that they add to the necessary strength of the structures and add to the costs.

### OBJECTIVE OF THE INVENTION

It is an objective of the present invention to eliminate the disadvantages referred to above.

One specific objective of the present invention is to disclose a new type of method enabling one to quickly stop a wind power plant, but, however, so that the tower is subjected as little as possible to forces that bend and stress it.

### SUMMARY OF THE INVENTION

The method for stopping the rotor of a wind power plant in accordance with the invention is characterised by what has been described in claim 1.

The method of the invention concerns the stopping of a rotor of a wind power plant from a normal operating situation or in a fault situation detected in a normal operating situation when the blade angles are in the operating position and the tower is inclined to the direction of the wind because of the wind pressure. In the method of the invention, the blade angles of the blades of a rotor are adjusted from the operating position towards the storm position so that at the first step, the blade angles of the blades of the rotor are turned at the first blade angle speed so that the rotor will slow down, enabling one to quickly reduce even the rotation speed of a rotor that goes into overdrive. At the second step, after the initial braking, the blade angle speed is reduced so that while in the operating position, the rotor acts to soften the pendulous motion of the tower against the wind. At the third step, as the pendulous motion of the wind turns to be parallel to the wind, the blade angle speed is increased to enhance the braking of the blades.

Thus, it is substantial in the invention that the rotor does not slow down as fast as possible and at once to a complete standstill, but only at the beginning the rotation speed is reduced as efficiently as possible. Then before the tower has time to tilt strongly, due to the effect of the braking, to a position bending towards the wind, the adjustment of the blade angles, i.e. the blade angle speed is changed so that the rotor will work in the operating position. In that case, the force affecting the tower and caused by the rotor softens the vibration motion of the tower from the straight normal position towards the wind. At the third step, as the softened vibration motion of the tower again turns to be parallel to the wind, the blade angle speed is again changed so that the blades will brake. Usually, with this motion path of the tower that is parallel to the wind it is possible to make the rotor stop. In any case, at this third step, the rotation speed of the rotor can be reduced to such a low level that one can proceed with the braking until complete standstill of the rotor. With a small rotation speed of the rotor, the bending of the tower is insignificant.

The method of the invention is based on a suitable adjustment of the blade angle speed of the blades so that the blade angle speed, i.e. the turning speed of the blade angle of the blade from the operating position to the storm position varies suitably according to the rotation speed of the rotor so that sometimes the blades slow down and sometimes accelerate the rotation speed of the rotor.

Preferably, one stops with the braking position of the first step as the tower is in a substantially vertical position. It is, however, possible that the braking of the first step is changed into the softening of the pendulous motion of the tower also at a point of time other than before or after the vertical position of the tower. The determination of this point of time is effected, for example, by the rotation speed of the rotor, the braking power being used or the vibration properties of the tower, such as the vibration amplitude.

Preferably, at the third step, the blade angles are kept in the braking position until the standstill of the rotor, i.e. at the third step, the blades are finally turned to the storm position.

It is also possible that the adjustment of the blade angles between the operating position and the braking position according to the direction of the inclination movement of the tower is terminated as the rotation speed of the rotor decreases below a given limit, after which the rotor is stopped in the braking position of the blades.

In the invention, the blade angle speeds can be kept substantially constant all the time during the given steps, but substantially continuing changes of the blade angle speeds are also possible according to the different steps of the stopping procedure. Substantial are the selections of the blade angle speeds so that when adjusted to the rotation speed of the rotor, the blades sometimes slow down the rotor and sometimes soften the pendulous motion of the tower in a controlled manner.

The stopping method of the invention has considerable advantages compared to the prior art. The invention enables one to safely stop the rotor without stressing the tower of the power plant. This, in turn, results in savings in the tower structures and in the operational costs.

In the following section, the invention will be described in detail with reference to the accompanying drawings, wherein
Fig. 1 schematically represents the movements of the tower of a wind power plant in the stopping procedure; and
Fig. 2 represents the change in the blade angle speed and in the blade angle as a function of time in the method of the invention.

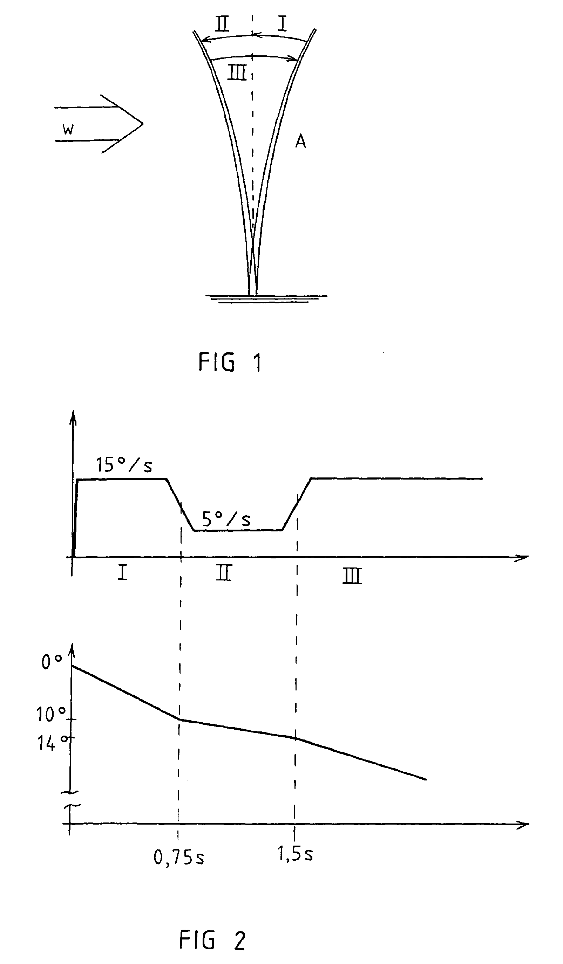

Fig. 1 schematically represents the tower 1 of a wind power plant, which while in the operating position A, is in a normal production situation, i.e. inclined to be parallel to the wind w. In that case, as shown in Fig. 2, the blade angle speed is 0 /s and the blade angle is 0 .

When there is a wish to quickly stop the rotor, i.e. to turn the blade angles to the storm position of 90 , it is performed as follows, according to the invention. At first, in the beginning of step I, the blade angle speed is increased to be sufficient so that the rotor will brake efficiently. The blade angle speed is e.g. about 15 /s. In that case, the rotor is sucked against the wind and the tower starts to turn strongly so as to be straight towards the wind both because of the effect of the rotor and the springiness of the tower.

After the tower has been substantially straightened, i.e. it is in a vertical position, the second step II is entered, e.g. after about 0.75 seconds. In that case, the blade angles have turned about 10 . At this step, the blade angle speed is dropped to a third, i.e. to a speed of about 5 /s. In that case, the rotor is not braking any more, but acts as a generator working against the wind w.

In this manner, it softens the pendulous motion of the tower towards the wind at step II.

When the pendulous motion of the tower has reached its extreme position towards the wind, step III is entered. At this step, the blade angles are about 14 and the blade angle speed is increased back to the value of step I i.e. about 15 /s. As the tower is inclined to the direction of the wind, the braking rotor efficiently softens the pendulous motion of the tower. At this speed, the blade angles can be turned to the storm position and the rotor will stop. Although the tower would still swing back against the wind before stopping, it does not have any detrimental effects on the tower structures because the rotation speed of the rotor and the pendulous motion of the tower have significantly decreased since the beginning of the braking.

The invention is not limited merely to the examples referred to above; instead many variations are possible within the scope of the inventive idea defined by the claims.

## Claims

1. A method for stopping the rotor of a wind power plant with the blade angles in the operating position and the tower inclined to the direction of wind, **characterised in that** in the method, the blade angles of the blades of the rotor are adjusted from the operating position towards the storm position so that
- at the first step, the blade angles are turned at the first blade angle speed so that the rotor will brake;
- at the second step, the blade angle speed is reduced so that while in the operating position, the rotor acts to soften the pendulous motion of the tower against the wind; and
- at the third step, as the pendulous motion of the tower turns to be parallel to the wind, the blade angle speed is increased to enhance the braking of the blades.

2. The method as defined in claim 1, **characterised in that** one stops with the braking position of the first step when the tower is in a substantially vertical position.

3. The method as defined in claim 1 or 2, **characterised in that** the blade angle speeds are constant during the corresponding steps.

4. The method as defined in claim 1 or 2, **characterised in that** the blade angle speeds are substantially continuously changing during the corresponding steps.

5. The method as defined in claim 1, **characterised in that** the blade angle speed of the second step is kept substantially lower, such as less than a half of the blade angle speed of the first step.

6. The method as defined in claim 1, **characterised in that** at the second step, the blade angle speed is zero.
